# EUROPÄISCHE PATENTANMELDUNG

(11) **EP 0 789 461 A2**
(43) Veröffentlichungstag der Anmeldung: **13.08.1997**
(21) Anmeldenummer: 97101901.3
(22) Anmeldetag: 06.02.1997
(51) Int. Cl.: H04B 1/74

(54) **Ersatzschaltung von Geräten oder Geräteteilen mit integrierbaren Schaltern**

(30) Priorität: 09.02.1996 DE 19604775
(71) Anmelder: SIEMENS AKTIENGESELLSCHAFT, 80333 München (DE)
(72) Erfinder: Meyer, Fritz, Dr.-Ing., 82110 Germering (DE)

(57) **Zusammenfassung**

Bei der Übertragung hochratiger digitaler Signale sind die Anforderungen an den Impulsverlauf und die Einhaltung vorgegebener Reflektionsfaktoren relativ aufwendig, da zur Linearisierung des Signalverlaufes neben Widerständen auch Induktivitäten und Kapazitäten verwendet werden müssen. Erfindungsgemäß werden deshalb zur Umschaltung von Ein- bzw. Ausgangssignalen im Zusammenhang mit der Ersatzschaltung Gruppen aus steuerbaren Stromquellen verwendet, wobei eine Gruppe ein Mehrzahl von Eingängen und einem gemeinsamen Ausgang und die andere Gruppe einen gemeinsamen Eingang und eine Vielzahl von Ausgängen aufweist.

## Beschreibung

Die Erfindung betrifft eine Anordnung zur Ersatzschaltung entsprechend dem Oberbegriff des Anspruchs 1.

Aus der DE-PS 27 53 420 ist eine Einrichtung zur Ersatzschaltung von Betriebssystemen für digitale Signale bekannt, bei der zu übertragende digitalen Signale durch gesteuerte Schalter von einem gestörten Signalweg auf einen ungestörten Ersatzsignalweg umgeschaltet werden können und die Ersatzschaltung durch Erkennung einer Störung oder durch einen äußeren Eingriff ausgelöst wird. Die bekannte Einrichtung betrifft Betriebssysteme der unteren Hierarchiestufen für digitale Signale mit niedrigen Bitraten, so daß Probleme, die bei der Übertragung hochratiger digitaler Signale, wie beispielsweise Einhaltung einer bestimmten Impulsform auftreten, bei der bekannten Einrichtung keine Rolle spielen.

Bei der Umschaltung von Ein- bzw. Ausgangssignalen von Geräten oder Geräteteilen wie beispielsweise Baugruppen in digitalen Übertragungssystemen dürfen diese Signale möglichst wenig verzerrt werden, da die Signale bei der Übertragung über in den Systemen vorgesehene Schnittstellen definierten Anforderungen genügen müssen. Bei hochratigen digitalen Signalen mit Bitraten von 100 Mbit/s oder mehr sind die Anforderungen an die Einhaltung eines Toleranzbereich des Impulsverlaufs und insbesondere die Einhaltung vorgegebener Reflexionsfaktoren nur mit relativ großem Aufwand zu erfüllen, wobei die Zuverlässigkeit durch zusätzliche Schalter im Übertragungsweg verringert wird. Zur Einhaltung der Forderungen an die digitalen Signale ist es deshalb notwendig, in den Übertragungsweg zusätzlich zu beispielsweise Pindioden als Schalter auch diskrete Widerstände, Induktivitäten und Kapazitäten einzufügen, wodurch die Zuverlässigkeit absinkt.

Die Aufgabe bei der vorliegenden Erfindung besteht also darin, die Ersatzschaltung von Geräten oder Geräteteilen, insbesondere von Baugruppen mit möglichst wenig Aufwand bei Bitraten von mindestens 100 Mbit/s zu ermöglichen.

Erfindungsgemäß wird die Aufgabe durch eine Anordnung der eingangs erwähnten Art gelöst, die durch die Merkmale des Kennzeichens des Patentanspruchs 1 weitergebildet ist. Durch die Möglichkeit der Integration der verwendeten Schalter sinkt die Zahl der erforderlichen Bauteile, wodurch in vorteilhafter Weise die Eignung für hohe Frequenzen und die Zuverlässigkeit erhöht wird, insgesamt verringert sich der Aufwand und damit die Kosten für die Realisierung der Ersatzschaltung, die außerdem bei der erfindungsgemäßen Lösung einen vergleichsweise geringen Leistungs- und Platzbedarf aufweist und bei der die Forderungen hinsichtlich der sogenannten Impulsmaske als Toleranzbereich eines Impulsverlaufs und der Einhaltung vorgegebener Reflexionsfaktoren vergleichsweise leicht einzuhalten sind. Bevorzugte Ausführungen der erfindungsgemäßen Anordnung sind in den Patentansprüchen 2 bis 5 näher beschrieben.

Die Erfindung soll im folgenden anhand eines in der Zeichnung dargestellten Ausführungsbeispiels näher erläutert werden.

Dabei zeigt:
- Figur 1: eine Baugruppenersatzschaltung mit in integrierten Schaltungen zusammengefaßten steuerbaren Schaltern,
- Figur 2: die Zusammenschaltung steuerbarer Stromquellen als steuerbare Schalter mit mehreren Eingängen und einem gemeinsamen Ausgang und
- Figur 3: die Zusammenschaltung mehrerer Stromquellen als Schalter mit einem Eingang und mit mehreren Ausgängen.

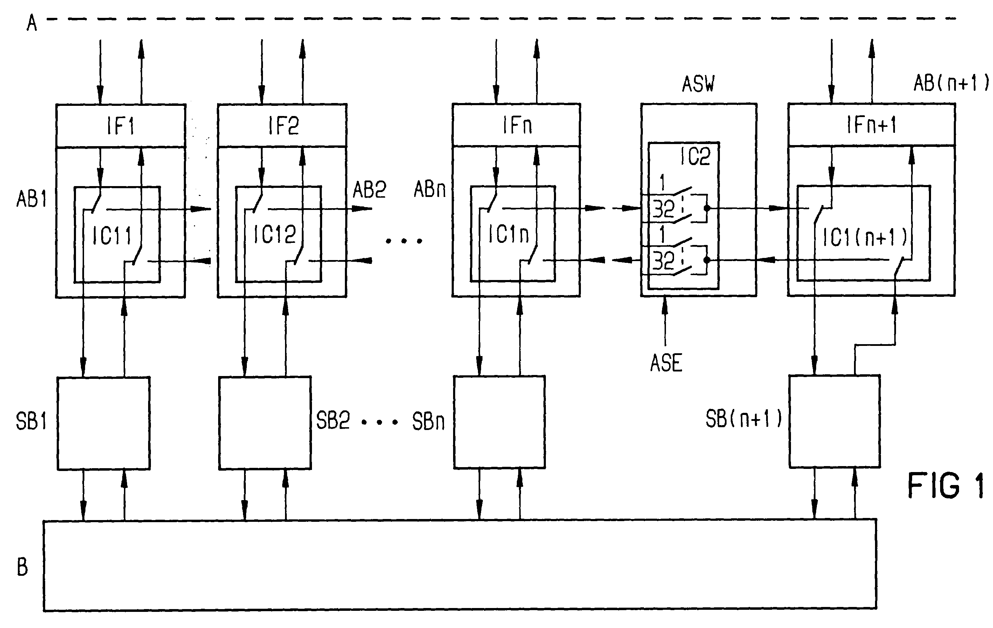

In der Figur 1 sind zwischen einem Anschlußfeld A und einer Signalweiterverarbeitung B in einer Vielzahl von Signalwegen Impulsformer IF1...IF(n+1) und Umschaltbausteine IC11...IC1(n+1) enthaltende Anschlußbaugruppen AB1 ... ABn+1 und diesen nachgeschaltete Signalbaugruppen SB1 ... SBn+1 angeordnet. Die Umschaltbausteine IC1...IC1(n+1) sind dabei am Eingang nach und am Ausgang vor den Impulsformern IF1...IF1(n+1) angeordnet. Durch diese Lösung sind die Schalter integrierbar, wodurch die Zuverlässigkeit gegenüber diskreten Lösungen ansteigt, die Kosten reduziert werden, sich der Leistungs- und Platzbedarf verringert,da die integrierten Umschalter keinerlei Einfluß auf die Impulsform und die Reflexion am Eingang und Ausgang der Schaltung haben. Beim Ausführungsbeispiel sind jeweils vier parallele STM-1 Schnittstellensignalpaare mit einer Bitrate von jeweils 155 Mbit/s einer Anschlußbaugruppe AB1 ... ABn+1 zugeordnet, wobei die Anschlußbaugruppen neben den Impulsformern IF1 ... IF(n+1) auch die die steuerbaren Schalter enthaltenden Umschaltbausteine IC11 ... IC1(n+1) umfassen. Im Normalbetrieb sind die Umschaltbausteine so angesteuert, daß die ankommenden und abgehenden Signale zu einer unmittelbar zugeordneten Signalbaugruppe SB1 ... SB(n+1) durchgeschaltet wird, die eine relativ umfangreiche Signalweiterverarbeitung oder Signalumsetzung, also beispielsweise eine Schnittstellenregenerierung, vornimmt und unmittelbar mit der Signalweiterverarbeitung B verbunden ist. Entsprechend der Anzahl n jeweils der ankommenden und der abgehenden Signale sind wenigstens eine Anzahl von 1+n/4 Anschlußbaugruppen AB1 ... AB(n+1) und 1+n/4 Signalbaugruppen SB1 ... SB(n+1) vorgesehen.

Bei Erkennen eines Störfalles in einer der Signalbaugruppen SB1 ... SBn oder durch manuelle Betätigung wird der im gestörten Signalweg liegende Umschaltbaustein IC11...IC1n der von der Störung betroffenen Anschlußbaugruppe ABX vom unmittelbaren Signalweg zu den Signalbaugruppen SB1 ... SBn auf einen Signalweg zu einem Auswahlschalter ASW umgeschaltet. Der Auswahlschalter ASW weist eine der Anzahl n der Anschlußbaugruppen entsprechende Anzahl n an Ein- bzw. Ausgängen auf, die jeweils mit einem gesteuerten Umschalter verbunden sind, deren Steuerung durch von einem nicht dargestellten Steuersignalgeber an den Steuereingang ASE des Auswahlschalters ASW abgegebene Signale erfolgt. Durch die Umschaltung auf den Ersatzsignalweg wird die im gestörten Signalweg befindliche Anschlußbaugruppe mit der zusätzlichen Anschlußbaugruppe ABn+1 verbunden, bei der die Umschaltbausteine so angeordnet sind, daß zwischen dem Ersatzsignalweg über den Auswahlschalter und einem zusätzlichen Übertragungsweg umgeschaltet werden kann. Zwischen dieser zusätzlichen Anschlußbaugruppe ABn+1 und der weiteren Signalweiterverarbeitung B ist eine zusätzliche, den Ersatz- bzw. den zusätzlichen Signalweg schließende Signalbaugruppe SBn+1 eingeschaltet. In der Signalweiterverarbeitung B sind weitere Umschalter und Querverbindungen integriert, durch die schließlich der Ersatzsignalweg geschlossen wird. In der Figur 1 sind die Schalterstellungen in Ruhestellung, also während des Normalbetriebs gezeichnet, in der die Übertragungswege zwischen vom Anschlußfeld A zur Signalweiterverarbeitung B in Fig. 1 senkrecht verlaufen.

Zur Erläuterung der Funktion der Anordnung nach Figur 1 sei davon ausgegangen, daß die zweite Signalbaugruppe SB2 gestört ist. Die üblicherweise vorhandenen Überwachungsschaltungen alarmieren die Störung und veranlassen über den Steuersignalgeber, daß in der zweiten Anschlußbaugruppe AB2 im Umschaltbaustein IC12 die Umschalter vom Signalweg zur zweiten Signalbaugruppe SB2 auf den Signalweg zum Auswahlschalter ASW umschalten. Dieser ist außerdem durch einen über seinen Steuereingang ASE ankommenden Steuerbefehl auf seinen, mit einem Ausgang der zweiten Anschlußbaugruppe verbundenen zweiten Eingang geschaltet und auf einen mit einem Eingang der zweiten Anschlußbaugruppe AB2 verbundenen Ausgang umgeschaltet. Der Auswahlschalter ASW übernimmt die Ausgangsignale der zweiten Anschlußbaugruppe AB2 und schaltet diese zu seinem, für alle an Ausgänge der ersten bis n-ten Anschlußbaugruppe AB1...ABn angeschlossenen Eingänge, gemeinsamen Ausgang durch, der mit einem zugeordneten Eingang der zusätzlichen Anschlußbaugruppe Abn+1 verbunden ist. Weiterhin wird in Gegenrichtung der mit einem Ausgang der zusätzlichen Anschlußbaugruppe Abn+1 verbundene gemeinsame Eingang des Auswahlschalters ASW über einen weiteren Umschalter auf seinen, mit dem Eingang der zweiten Anschlußbaugruppe AB2 verbundenen Ausgang durchgeschaltet. Durch weitere Steuerbefehle sind die Umschalter in der n+1. Anschlußbaugruppe ABn+1 vom senkrechten auf den waagerechten Übertragungsweg umgeschaltet und leiten die Signale der zweiten Anschlußbaugruppe AB2 über die n+1. Signalbaugruppe SBn+1 zur Signalweiterverarbeitung B.

Im Falle dieser Ersatzschaltung kann der gestörte Abschnitt überprüft und gegebenenfalls die defekte zweite Signalbaugruppe SB2 ausgewechselt werden, ohne daß der Übertragungsweg unterbrochen wird, da sich die Schalter für die Ersatzschaltung außerhalb der Signalbaugruppen befinden.

Die Impulsformer IF1 ..IFn für die Eingangssignale in den Anschlußbaugruppen AB1 regenerieren das vom Anschlußfeld A stammende Eingangssignal, bevor es dem nachgeschalteten Umschaltbaustein zugeführt wird. Dadurch wird vermieden, daß der Umschaltbaustein das Eingangssignal vor der Regenerierung störend beeinflussen kann. Auch auf die an das Anschlußfeld A abzugebenden Ausgangssignale haben die Umschalter keinen Einfluß, da die wichtigen Schnittstelleneigenschaften, wie Impulsmaske, also vorgeschriebene Impulsform an der Schnittstelle mit Toleranzbereich, und Reflexion im wesentlichen durch die Impulsformer IF1 ... IFn+1 festgelegt werden.

In den Umschaltbausteinen der Anschlußgruppen AB1 ...ABn+1 der Figur 1 sowie im Auswahlschalter ASW werden zwei unterschiedlich geschaltete Gruppen steuerbarer Stromquellen eingesetzt. Zum einen handelt es sich Gruppen von Stromquellen, bei denen eines der Eingangssignale auf einen gemeinsamen Ausgang durchgeschaltet wird, im anderen Fall wird ein Eingangssignal auf einen von mehreren Ausgängen durchgeschaltet.

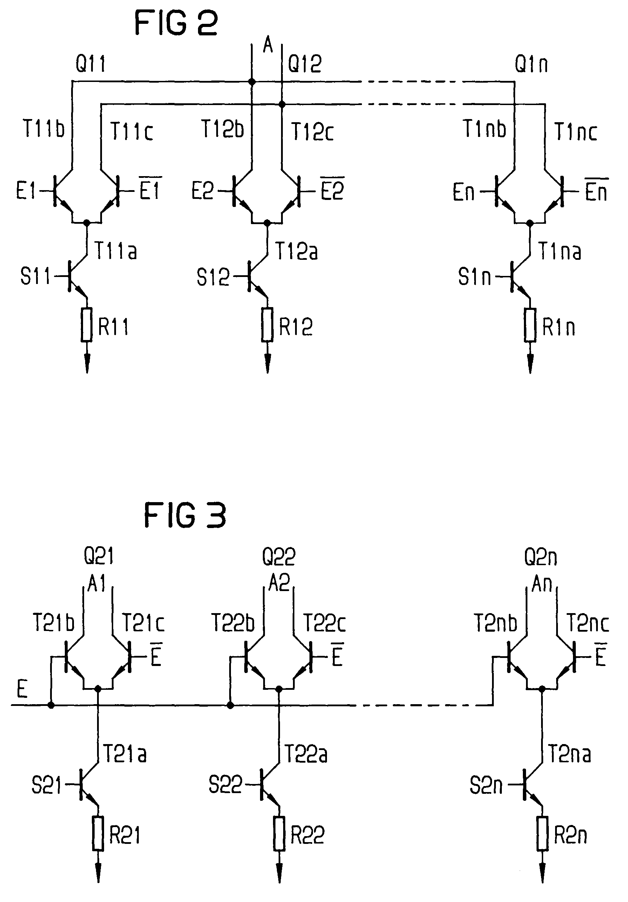

In der Figur 2 sind n steuerbare Stromquellen Q11 ... Qn ausgangsseitig parallelgeschaltet. Die Stromquellen enthalten jeweils einen Stromquellentransistor T11a...T1na und einen emittergekoppelten Differenzverstärker mit 2 Transistoren, wobei der Basisanschluß des einen Transistors T11b...T1nb mit einer Quelle für eines der umzuschaltenden Eingangssignale (E1 ... En) verbunden ist, während der Basisanschluß des zweiten Transistors T11c ...T1nc mit einer Quelle für das jeweils inverse Eingangssignal verbunden ist. Die zusammengeführten Emitteranschlüsse der einzelnen Differenzverstärker sind mit dem Kollektoranschluß des jeweils zugeordneten Stromquellentransistors (T11a... T1na) verbunden, dessen Basisanschluß mit einer Quelle für ein Steuersignal (S11, S12, ... S1n) verbunden ist. Die Emitteranschlüsse der Stromquellentransistoren sind über Emitterwiderstände R11 ... R1n mit Bezugspotential verbunden, die Kollektoranschlüsse der einen Transistoren T11b ... T1nb sind untereinander und mit einem gemeinsamen Ausgang verbunden, entsprechendes gilt für die Kollektoranschlüsse der anderen Transistoren.

Für n = 2 stellt diese Anordnung einen einfachen Umschalter dar, mit dem eines der Eingangssignale auf den gemeinsamen Ausgang A geschaltet werden kann. Dieser Umschalter wird in der Figur 1 in den Umschaltbausteinen IC11...IC1(n+1) der Anschlußbaugruppen eingesetzt, um das von der Signalbaugruppe oder bei Ersatzschaltung vom Auswahlschalter stammende Signal über den Impulsformer zum Anschlußfeld A durchzuschalten. Bei einer größeren Anzahl n steuerbarer Stromquellen ergibt sich der obere Teil des Auswahlschalters ASW, durch den eines der Ausgangssignale der Anschlußbaugruppen AB1 .. ABn ausgewählt und zur n + 1.-Anschlußbaugruppe ABn+1 durchgeschaltet wird.

Die Schalter in der Figur 2 bestehen aus steuerbaren Stromquellen Q11...Q1n, die im High-Zustand des Steuersignals S Strom liefern, im Low-Zustand des Steuersignals dagegen gesperrt sind. Die Stromquellentransistoren T11a... T1na speisen dabei den zugeordneten Differenzverstärker, wobei nur jenes Eingangssignal E1 ... En zum Ausgang durchgeschaltet wird, dessen Differenzverstärker durch den Stromquellentransistor mit Strom versorgt wird, das an diesem Transistor anliegende Steuersignal also auf dem High-Pegel liegt. Alle anderen Steuersignale sind dann im Low-Zustand, so daß die Eingangssignale der zugeordneten Differenzverstärker nicht zum Ausgang durchgeschaltet werden, zusätzlich ist ein besonderer Betriebsfall, der sogenannte Standby-Betrieb möglich, bei dem zur Stromeinsparung alle Steuersignale auf dem Low-Pegel sind.

In der Figur 3 sind die mittels Stromquellentransistor und emittergekoppelten Differenzverstärker gebildeten Stromquellen Q21...Q2n eingangsseitig parallelgeschaltet, wobei jeweils der Basisanschluß des einen Transistors T21b... T2nb mit der Quelle für das gemeinsame Eingangssignal verbunden sind, während der Basisanschluß des jeweils anderen Transistors T21c ... T2nc mit einer Quelle für das inverse Eingangssignal verbunden ist. Die zusammengeführten Emitteranschlüsse der Differenzverstärkertransistoren sind jeweils mit dem Kollektoranschluß des zugeordneten Stromquellentransistors T21a...T2na verbunden, wobei die Basisanschlüsse der Stromquellentransistoren mit Quellen für entsprechende Steuersignale (S21 ... S2n) verbunden sind. Die Emitteranschlüsse der Stromquellentransistoren sind wiederum über Emitterwiderstände (R21 ... R2n) mit Bezugspotential verbunden.

Für n = 2 stellt diese Anordnung einen einfachen Umschalter dar, mit dem das Eingangssignal E auf einen der Ausgänge A1 oder A2 geschaltet werden kann. Dieser Umschalter ist ebenfalls in den Umschaltbausteinen der Anschlußbaugruppen AB1 ... ABn+1 vorhanden, er dient dort dazu, das vom Impulsformer abgegebene Eingangssignal entweder an die zugeordnete Signalbaugruppe SB1 ... SBn+1 oder an einen Eingangsanschluß des Auswahlschalters ASW abzugeben. Aus der Vielzahl seiner an die Ausgänge der Anschlußbaugruppen angeschlossenen Eingangsanschlüsse wählt er denjenigen aus, im aktuellen Ersatzsignalweg liegt und diesen an die n+1.-Anschlußbaugruppe ABn1, also an einen folgenden Abschnitt des Ersatzsignalwegs durchschaltet. Bei der Anordnung nach der Figur 3 handelt es sich uni die untere Gruppe der Umschalter im Auswahlschalter ASW, die ein von der n+1.-Anschlußbaugruppe stammendes Eingangssignal an einen ihrer Ausgänge weiterschalten, der mit den Eingangsanschluß derjenigen Anschlußbaugruppe verbunden ist, in deren Hauptsignalweg eine Störung aufgetreten war. Die Schalter in der Figur 3 bestehen ebenfalls aus steuerbaren Stromquellen, die im High-Zustand des am Stromquellentransistors anstehenden Steuersignals Strom liefern, im Low-Zustand dagegen nicht. Das Eingangssignal wird dabei nur zu demjenigen Ausgang durchgeschaltet, dessen Stromquellentransistor ein Steuersignal im High-Pegel erhält. Alle anderen Steuersignale sind im Low-Zustand, so daß auch hier das Eingangssignal zu allen anderen Ausgängen gesperrt ist, für den Stand-by-Mode können sich auch alle Steuersignale im Low-Zustand befinden.

## Patentansprüche

1. Anordnung zur Ersatzschaltung von Geräten oder Geräteteilen, insbesondere Baugruppen mit gesteuerten Schaltern, durch die von einem ersatzzuschaltenden Signalweg auf einen Ersatzsignalweg umgeschaltet wird, wobei die Ersatzschaltung durch Erkennung einer Störung oder durch äußeren Eingriff ausgelöst wird,
**dadurch gekennzeichnet,**
daß zwischen einem Anschlußfeld (A) und einer Signalweiterverarbeitung (B) mit dem Anschlußfeld (A) unmittelbar verbundene Anschlußbaugruppen (AB1 ... ABn) und diesen unmittelbar nachgeschaltete, die Signale verarbeitende und/oder umcodierende Signalbaugruppen (SB1 ... SBn) vorgesehen sind, daß im ungestörten Betrieb diese Signalbaugruppen unmittelbar mit der Signalweiterverarbeitung (B) verbunden sind, daß bei einer Störung im Signalweg oder bei manuellem Eingriff von außen zwischen Anschlußbaugruppen (AB1 ... ABn) und der Signalweiterverarbeitung (B) eine Ersatzschaltung des Signalweges von der betroffenen Anschlußbaugruppe über einen Auswahlschalter (ASW), eine zusätzliche Anschlußbaugruppe (ABn+1), eine zusätzliche Signalbaugruppe (SBn+1) und einem in der Signalweiterverarbeitung (B) enthaltenen intern schaltbaren Ersatzsignalweg auch in Gegenrichtung ausgelöst wird, daß dazu in den Anschlußbaugruppen (AB1 ... ABn) im Anschluß an deren mit dem Anschlußfeld (A) verbundenen Ein- und Ausgängen Impulsformer (IF1 ... IFn)und mit diesen verbundene Umschaltbausteine (IC11 ... IC1n) vorgesehen sind, die zwischen Leitungen zur zugeordneten Signalbaugruppe und einem Auswahlschalter (ASW) umschaltbar sind, daß der Auswahlschalter (ASW) über an seinem Steuersignaleingang (ASE) anstehende Signale so gesteuert wird, daß er ein- und ausgangsseitig mit der im gestörten Signalweg befindlichen Anschlußbaugruppe verbunden ist, daß die zusätzliche Anschlußbaugruppe (ABn+1) einen Umschaltbaustein aufweist, der einerseits im Signalweg zwischen einem gemeinsamen Ausgang des Auswahlschalters (ASW) und einem zugeordneten Eingang der zusätzlichen Anschlußbaugruppe (ABn+1) und andererseits zwischen einem gemeinsamen Eingang des Auswahlschalters (ASW) und einem zugeordneten Ausgang der zusätzlichen Anschlußbaugruppe (ABn+1) umschaltbar ist, daß die Umschaltbausteine jeweils eine Anzahl parallelgeschalteter steuerbarer Stromquellen aufweisen, die jeweils einen emittergekoppelten Differenzverstärker und einen Stromquellentransistor enthalten, daß dabei dessen Kollektor mit den zusammengeführten Emitteranschlüssen der beiden im Differenzverstärker enthaltenen Transistoren verbunden ist, daß an eine Quelle für ein Steuersignal die Basis des Stromquellentransistors angeschlossen ist, daß der Emitter des Stromquellentransistors über einen Emitterwiderstand mit Bezugspotential verbunden ist, daß der Basisanschluß des einen Reverenzverstärkertransistors mit einer Quelle für das umzuschaltende Übertragungssignal und der Basisanschluß des anderen Differenzverstärkertransistors mit einer Quelle für das inverse Übertragungssignal verbunden ist und daß die Kollektoranschlüsse der Differenzverstärkertransistoren über Widerstände und/oder abgeschlossene Leitungen an eine Quelle für eine Betriebsspannung und einen oder mehrere Ausgänge angeschlossen sind.

2. Anordnung nach Anspruch 1,
**dadurch gekennzeichnet,**
daß die gesteuerten Schalter in den Anschlußbaugruppen AB1 ... ABn+1 am Eingang nach und am Ausgang vor Impulsformern(IF...IFn+1) angeordnet sind.

3. Anordnung zur Ersatzschaltung nach Ansprüche 1 oder 2,
**dadurch gekennzeichnet,**
daß in einer Anschlußbaugruppe (AB1 ... ABn+1) jeweils vier Signalpaare und damit vier Impulsformer und vier Umschaltbausteine zusammengefaßt sind.

4. Anordnung zur Ersatzschaltung nach Anspruch 1,
**dadurch gekennzeichnet,**
daß im Auswahlschalter (ASW) eine Mehrzahl mittels Differenzverstärkern und jeweils einem Stromquellentransistor aufgebauter steuerbarer Stromquellen als Schalter angeordnet sind, deren Ausgangsanschlüsse parallelgeschaltet sind und deren Eingangsanschlüsse jeweils einem Eingangsanschluß des Auswahlschalters (ASW) entsprechen.

5. Anordnung nach Anspruch 1,
**dadurch gekennzeichnet,**
daß eine Mehrzahl n ≥ 2 mittels Differenzverstärkern und jeweils einem Stromtransistor aufgebauter steuerbarer Stromquellen als Schalter vorgesehen sind, wobei der eine Eingangsanschluß aller Differenzverstärker parallelgeschaltet und mit einer Quelle für ein Eingangssignal verbunden ist und der andere Eingangsanschluß ebenfalls parallelgeschaltet und mit einer Quelle für das inverse Eingangssignal verbunden ist und die Ausgangsanschlüsse der Differenzverstärker die Ausgangsanschlüsse des Auswahlschalters (ASW) darstellen.
